# EUROPEAN PATENT APPLICATION

(11) **EP 1 096 632 A1**
(43) Date of publication of application: **02.05.2001**
(21) Application number: 00203749.7
(22) Date of filing: 27.10.2000
(51) Int. Cl.: H02G 5/00, H02G 5/10

(54) **Electrical distribution system**

(30) Priority: 27.10.1999 VE 217799
(71) Applicant: Burguera, Elio C., Caracas (VE)
(72) Inventor: The designation of the inventor has not yet been filed
(74) Representative: Ungria Lopez, Javier

(57) **Abstract**

Electrical distribution systems, more specifically bus bar conductors held in ducts for electric power distribution, which comprise ducts for electric power conductors and electric power conductors held in said ducts. The electric power conductors of the electrical distribution system present a discontinuous geometry whilst the electric power distribution ducts include heat transfer means allowing dissipation of the thermal energy on the outside to the duct produced by the electric power conduction inside said duct.

## Description

The present invention relates to electrical distribution systems more specifically to conducting bus bars contained in ducts for the distribution of electric power.

Standard electric power conductors have a solid rectangular, circular or elliptical cross section, and which within the electric power distribution ducts are fastened in parallel with each other at intervals of dimensions that depend on the requirements and/or conditions to which they are subjected.

US-A-5,828,006 describes an electrical distribution system which comprises a plurality of solid power bus bars and a plurality of metallic ducts each one of which contain one of said bars and in which clamps arranged periodically at given intervals hold said ducts and the bus bars in a position parallel to each other.

US-A-5,854,445 describes an electrical distribution system which comprises a supporting casing in which the opposing sides of the side walls of said casing have been shaped with corrugations in order to maintain in position power bus bars arranged parallel to each other thereby avoiding the movement of said bus bars, providing protection against a short circuit and the strength necessary to avoid deformation of said bus bars. The power bus bars are solid and their cross section is elliptical.

Nevertheless, the design of bus-way systems for alternating currents has always been a problem. The problem is particularly acute for high currents on low voltage multi-phase systems, such as are found in power supply system for industrial plants.

However it has been possible to demonstrate that it is possible to achieve a greater heat transfer in solid rectangular bus bars than in cables having an elliptical or circular transversal section. In addition the amperage could be significantly enhanced in an arrangement of power bus bars in which said bars are plates of rectangular cross section which are laid in close contact and in such a manner that their phases are paired. This choice of two bi-laminar bus bars per phase increases the contact area for the transfer of heat from the conductor, reduces the distance of the heat gradient and lowers the heat loss due to the reactance of the line and the resistance of the junctions. Thanks to a lower circuit reactance of the paired power bus bars the voltage drop is reduced to the minimum.

Indeed, US-A-4,008,365 describes three pairs of power bus bars laid in parallel with each other and in which each member of a pair has an opposing phase in relation with the other member of said pair and there being located between each one of said pairs a three-phase neutral conductor and in this manner maintaining balanced the voltage of the circuit of the circuit line without transposition such as is required in the conventional distribution systems.

Additionally there have been attempts to boost the heat transfer and current-carrying capacity of the power bus bars. Indeed, US-A-5,101,080 describes power bus bars consisting of a first plate from which are extended perpendicularly, from each of its lateral extremities two second parallel plates and in which said second plates are of greater thickness than the first plates. This conductive bus bar offers advantages from the electrical, mechanical and thermal points of view. Thanks to the difference in thickness between the first and second plates and to the disposition of the power bus bars inside the relative electric power distribution duct, the thicker plate is located where the current density is greatest, thus achieving a more uniform current distribution and lower heat loss. The reduction in heat loss permits the power bus bars to be employed more efficiently for electric power conduction.

In the measure that the use of electric power is extending and becoming more diversified, there is frequently a requirement for high amounts of power in reduced spaces. This occurs, for example, in factories where there is a large variety of machines in a small area. Consequently, the need arise to supply high levels of power at low voltage with high current values.

The present invention provides an electrical distribution system based on the use of ducts which contain electric power conductors that conduct the electric current in a more efficient manner when compared with previously known systems. The present invention employs electric power conductors of discontinuous geometry in order to obtain desired current values within a particular range in which the magnitude of the area and/or the shape of the cross section of said electric power conductors varies along the length thereof.

Additionally the present invention provides a heat transfer system which comprises a plate that is extended from a side edge of said duct to the other side edge of said duct, which makes possible the diffusion of the heat produced by the conduction of electric power towards the outside of the duct. Additionally said plate performs the functions of the neutral of the electrical conduction system.

In the present description it shall be understood that the term conductor of discontinuous geometry means any conductor having a transversal section represented by an open figure or a figure closed by straight or curved lines and in which the size and/or shape of said transversal section varies along the length of the longitudinal axis of the conductor. Also included in the present definition are those conductors in which the shape and the magnitude of the area of the cross sections are made to vary by means of elements which do not form part of the conductor but which are attached to the surfaces of the conductors through any kind of fastening means. Said elements can be made from the same material as that from which the conductor is made or from materials that range from materials having similar properties to materials with different properties and they can be distributed around the perimeter and/or along the length of the longitudinal axis in of the conductor in an ordered and/or disordered manner. Said elements shall be termed attached conductive elements. The shape of the transversal section of the latter can be that of any open figure or any figure closed by closed or curved lines.

It is an object of the present invention is to provide an electrical distribution system which facilitates a reduction in the voltage drop and the heat loss with respect to the electrical distribution systems of the state of the art.

A further object of the present invention is to provide a conductor of discontinuous geometry for conducting electric power.

Another object of the present invention is to provide electrical distribution ducts which contain conductors of discontinuous geometry.

It has been possible to demonstrate that it is possible to obtain electric power conductors of a single size but having different amperage ratings by shaping said electric power conductor with a discontinuous geometry. This makes it possible to standardise the pieces at industrial production level, which augments the simplicity of assembly, reduces inventory level, and permits the enlargement of the electrical distribution systems without having to radically alter the initial system.

The present invention provides an electrical distribution system which comprises ducts for electric power conductors and the electric power conductors held in said ducts. The electric power conductors of the present electrical distribution system are characterised through having a discontinuous geometry. The electric power distribution ducts have means for heat transfer which permit the dissipation of thermal energy outside the duct, said energy being produced by the conduction of electric power inside said duct.

### BRIEF DESCRIPTION OF THE DRAWINGS

So as to further illustrate the invention, it will be described hereinafter on the grounds of attached drawings in which
FIGURE 1 is a side view of two possible embodiments of the conductor of discontinuous geometry.
FIGURES 2a and 2b are views in perspective of the second embodiment of the electric power conductor of discontinuous geometry.
FIGURE 3a and 3b are views of the transversal section of the conductors of discontinuous geometry of the figures 2a and 2b, respectively.
FIGURE 4 shows a transversal section of a duct for electric power distribution which holds the conductors of figure 2.
FIGURE 5 shows a transversal section of the electric power distribution system in which the centre plate has perpendicular extensions which are in contact with the inside and side walls of the pertinent duct.
FIGURE 6 shows a transversal section of the electric power distribution system in which the centre plate has the heat transfer means that extend beyond the relative duct.
FIGURE 7 is a view in perspective of possible dispositions of a pair of conductors of discontinuous geometry in paired phase configuration to be inserted into an electric power distribution duct.

### DESCRIPTION OF EMBODIMENTS OF THE INVENTION

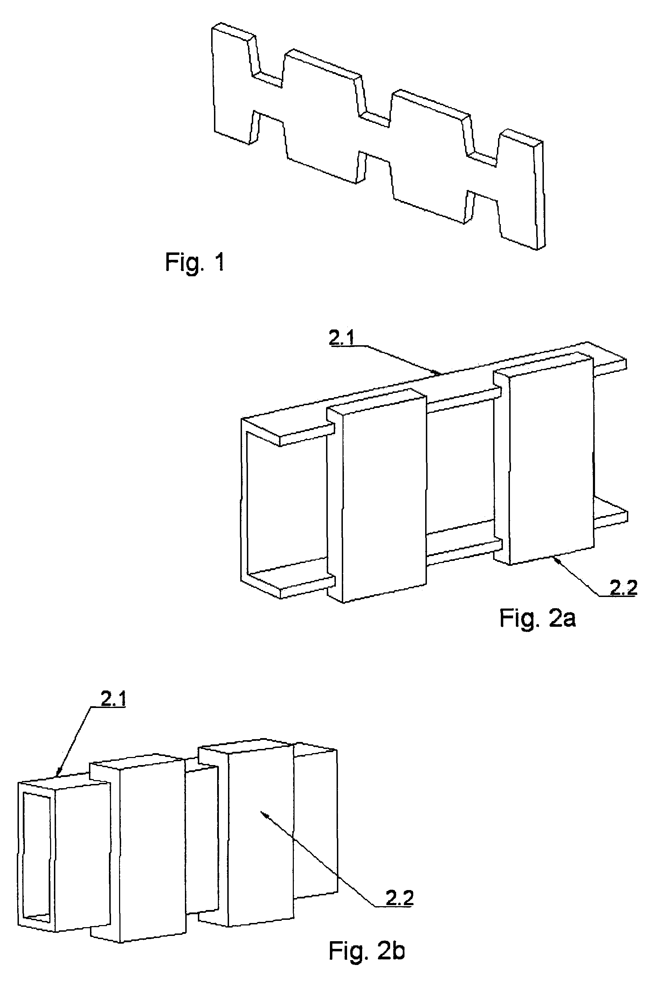

The electric power conductor of discontinuous geometry in accordance with the present invention consists of an electric power conductor in which the area and/or the shape of its transversal section gradually varies as one advances in parallel along the longitudinal axis of said conductor (see fig. 1 and 2).

More specifically, in a preferred embodiment of the invention, the area of the transversal section has two unique values which are maintained constant alternately along different segments of the length of the conductor and in which said segments are repeated periodically (see Fig. 1). The shape of the transversal section of said conductor in a preferred embodiment of the present invention are figures closed by straight lines, such as rectangles, squares, triangles, trapeziums, among others (see Fig. 2b). Another preferred embodiment of the invention is that in which the transversal section takes the form of a figure closed by means of curved lines such as circles or ellipses. The variations in the shape of the transversal section ca be achieved either through the shaping of the actual material which constitutes the conductor (see Fig. 1) or by means of conductive elements attached to the electric power conductor in question (see Fig. 2).

Another preferred form of the present invention is a conducting bar which comprises an electric power conductor the transversal section of which is an open, C-shaped figure (see Figure 2a) to which has been adjoined attached conductive elements (2.2) of rectangular transversal section each having a parallel incision on the top surface of said conductive element in order that said conductive elements fit into the edges of said conductors. The attached conductive elements can be made of the same material as that of the electric power conductor in question and can be distributed around the perimeter and/or along the longitudinal axis of the conductor in an ordered and/or disordered manner.

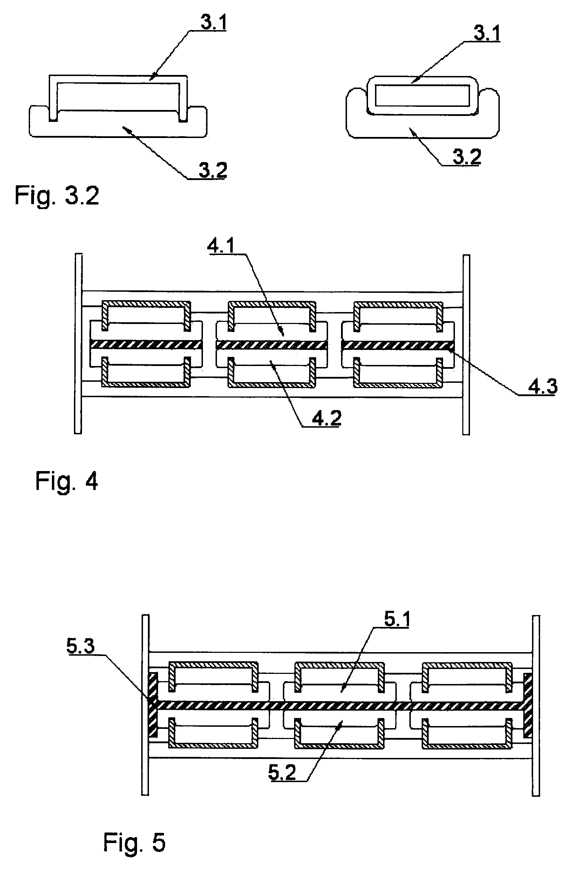

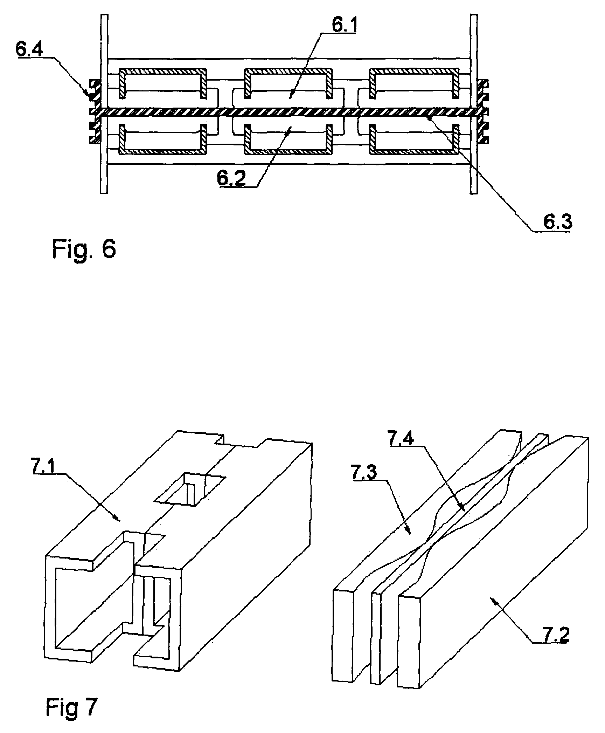

In addition, the present invention envisages an electrical distribution system (see Figure 5) which comprises in parallel with one another and contained inside a duct, three first electric power conductors (5.1), and opposing said first electric power conductors are disposed in turn inside the same duct, in parallel with one another, three second electric power conductors (5.2), in which said three first electric power conductors and second conductors are separated by a conductive plate (5.3) which extends from one side edge of said duct to the other side edge of said duct. The phases of each of the conductors are arranged in such a manner that each conductor is of opposing polarity with respect to its partner in the corresponding pair, where the conductor pair comprises two conductors that are placed face to face. This configuration is commonly termed 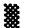 paired phase 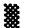 . Another preferred form of the present electric power distribution system is that in which the conductive plates are replaced by any of the conductors of discontinuous geometry described above. A possible manner of implementing said embodiment of the invention is to place the conductors in a form such that the protuberances (7.1) of said discontinuous conductors (7.2) are situated face to face (see figure 7).

The conductive plate that separates the first and the second conductors acts as a means of heat transfer dissipating the heat produced inside of the duct on the outside thereof. The plate can have extensions perpendicular to itself whereby said extensions (5.4) are in direct contact with the side and inside edges of the duct or else the plate can have heat transfer means arranged along all or part of its side edges and in which said heat transfer means are extended outside the corresponding duct in order to dissipate the heat produced into the ambient air (see figure 6). The heat transfer means are whatever structure that permits heat exchange with the environment. An example of said heat exchange means (6.4) is shown in figure 6 and comprises irregularities that extend beyond the surface of the heat transfer means.

It is not deemed necessary to extend this description further in order that an expert in the matter comprehend the scope of the invention and the benefits stemming therefrom.

The materials, form, size and disposition of the elements shall be capable of variation provided that this does not imply an alteration to the essential nature of the invention.

The terms in which this specification has been written are to be taken in their broadest sense and not restrictively.

## Claims

1. An electric power conductor which comprises a transversal section and a length characterised in that said transversal section of said electric power conductor varies along the length of the longitudinal axis of the conductor.

2. The electric power conductor of claim 1, in which the area of the transversal section varies along the length of the longitudinal axis of the conductor.

3. The electric power conductor of claim 1, in which the shape of the transversal section varies along the length of the longitudinal axis of the conductor.

4. The electric power conductor of claim 1, in which the area and the shape of the transversal section vary simultaneously along the length of the longitudinal axis of the conductor.

5. The electric power conductor of claim 3, in which the shape of the section is maintained constant along a portion of the length of the conductor.

6. The electric power conductor of claim 2, in which the area of the section is maintained constant along a portion of the length of the conductor.

7. The electric power conductor of claim 5, in which said portion is repeated periodically.

8. The electric power conductor of claim 2, in which the area has two unique values of area.

9. The electric power conductor of claim 8, in which the two unique values of area are maintained alternately constant along a portion of the length.

10. The electric power conductor of claim 1, in which the transversal section has the form of a figure closed by straight or curved lines.

11. The electric power conductor of claim 1, in which the transversal section has the form of an open figure of straight or curved lines.

12. The electric power conductor of claim 10, in which the closed figure is a polygon.

13. The electric power conductor of claim 12, in which the open figure is a circle or an ellipse.

14. The electric power conductor of claim 1, in which the transversal section is shaped to vary the area and/or the form of said transversal section.

15. The electric power conductor of claim 1, in which to the transversal section are added attached conductive elements in order to vary the area and/or the form of said transversal section.

16. An electric power conductor which comprises a transversal section and a length; said electric power conductor being characterised in that to the perimeter thereof are added an attached conductive element in order to vary the area of the transversal section of said electric power conductor.

17. The electric power conductor of claim 16, in which the transversal section of said attached conductive element has the form of a polygon.

18. The electric power conductor of claim 16, in which the transversal section of said conductive element has the form of a figure closed by curved lines.

19. The electric power conductor of claim 16, in which said attached conductive element is made of the same material as that of which the electric power conductor is made.

20. The electric power conductor of claim 16, in which said attached conductive element is made of a material different from that of which the electric power conductor is made.

21. The electric power conductor of claim 16, in which a plurality of attached conductive elements are arranged around either the perimeter of the electric power conductor, along the length of the longitudinal axis of the conductor, or both in an ordered or disordered manner.

22. The electric power conductor of claim 16, in which the transversal section of said conductor is conformed by a first side from which from each one of its side edges and at a given angle, second sides extend.

23. The electric power conductor of claim 22, in which said conductive element has incisions in parallel and separated at a distance such that each second side of said electric power conductor fits into each one of said incisions.

24. An electrical distribution system which comprises in parallel one alongside the other and contained within a duct, at least three first electric power conductors, and opposing said first electric power conductors are arranged in turn, in parallel one alongside the other, at least three second conductors and in which said three first electric power conductors and second conductors are connected in paired phase configuration and in which each pair, formed by one of the first and one of the second electric power conductors arranged each one opposing the other, are separated by a conductive plate which performs the functions of the neutral line.

25. An electrical distribution system which comprises in parallel one alongside the other and contained within a duct, at least three first electric power conductors, and opposing said first electric power conductors are arranged in turn, in parallel one alongside the other, at least three second conductors and in which said first electric power conductors and second conductors are connected in paired phase configuration and are separated by a conductive plate which performs the functions of the neutral line and which is extended from one side edge of said duct to the other side edge of said duct.

26. The system according to claim 25, in which said plate acts as a heat transfer means.

27. The system according to claim 25, in which said plate has heat transfer means attached thereto.

28. The system according to claim 27, in which said heat transfer means comprises elongations which are extended perpendicularly from the side edges of said plate.

29. The system according to claim 28, in which said elongations are in contact with the side walls of the duct holding the first and second conductors.

30. The system according to claim 27, in which said heat transfer means are extended outside said duct holding the first and second conductors.

31. The system according to claim 25, in which each of the first and second conductors comprise a transversal section and a length characterised in that said transversal section of each conductor varies along the length of the longitudinal axis of the conductor.

32. The system according to claim 25, in which each of the first and second conductors comprise a transversal section and a length; said conductors being characterised in that to each perimeter thereof are added an attached conductive element in order to vary the area of each of the transversal sections of said conductors.
